# EUROPEAN PATENT APPLICATION

(11) **EP 1 582 955 A2**
(43) Date of publication of application: **05.10.2005**
(21) Application number: 05006910.3
(22) Date of filing: 30.03.2005
(51) Int. Cl.: G05B 19/423

(54) **Robot teaching apparatus**

(30) Priority: 31.03.2004 JP 2004105791
(71) Applicant: FANUC LTD, Yamanashi 401-0597 (JP)
(72) Inventor: Nihei, Ryo, Fujiyoshida-shi Yamanashi 403-0005 (JP); Kato, Tetsuaki, Hadano-shi Kanagawa 259-1326 (JP); Kuroshita, Teruki FANUC Dai3virakaramatsu, Minamitsuru-gun Yamanashi 401-0511 (JP)
(74) Representative: Schmidt, Steffen J.

(57) **Abstract**

When an operator (4) applies an external force to a robot (1) via a handle (5) attached to an end portion of an arm of the robot (1), the external force is estimated or detected by a force sensor (30) or an acceleration sensor (40). A copying control means (8) of a robot control unit (2) determines the position of the tool top point (31). When the robot (1) is located in a copying control enabling region (15, 18) or a copying control enabling line segment (16) defined in a block (10) of enabling region settings, the copying control is carried out. The directions of the movement and change of orientation to be followed are determined with reference to the content of the copying control settings in the region where the robot is located at present in the block (9) of the copying control settings, and the copying control is carried out for only the movement and change of orientation in the determined directions, to thereby move the robot (1).

## Description

### BACKGROUND OF THE INVENTION

### 1. Field of the Invention

The present invention relates to a robot teaching apparatus for teaching an operation to an industrial robot, and, more particularly, to for example a robot teaching apparatus suitable for teaching an operation to a robot used in an application for taking a shaped article out of a mold.

### 2. Description of the Related Art

One of the typical techniques for teaching a position and an orientation to a robot is the method of operating the robot by manual operation to make the robot take a desired position and orientation and thereby teaching the position and orientation at that time to the robot (teaching playback method). The conventionally most generally used method for manually operating a robot in this way is to operate operation keys (jog movement keys) provided in a teaching operation panel connected to a robot control unit.

With this method, however, it is necessary to designate a direction of movement of the robot by selectively using a plurality of operation keys corresponding to the coordinate axes (for example, the X-axis, Y-axis, and Z-axis of a robot base coordinate system) and robot axes (for example, J1-axis, J2-axis,..., and J6-axis). A long time is required for remembering the correspondence between the operation of keys and operation directions of the robot. Especially, when an operator is unfamiliar with the operation, there is a risk that the robot will end up being made to collide with a nearby object or the operator himself due to mistaken operation.

Up to now, no document has been found solving the above-mentioned defects of the related art and disclosing a robot teaching apparatus provided with a simple means enabling an operator to manually operate a robot to teach a position and orientation to the robot which enables the operator to teach the robot by making it move by manual operation in an easily understandable manner and which reliably prevents the robot from colliding with a nearby object or the operator at the time of movement of the robot by the manual operation.

### SUMMARY OF THE INVENTION

Accordingly, an object of the present invention is to solve the above-mentioned defects of the related art and provide a robot teaching apparatus provided with a simple means enabling an operator to manually operate a robot to teach a position and orientation to the robot which enables the operator to teach the robot by making it move by manual operation by an easily understandable manner and which reliably prevents the robot from colliding with a nearby object or the operator at the time of movement of the robot by the manual operation.

The present invention introduces to movement of a robot by manual operation a robot control technique enabling an operator to easily obtain an intuitive grasp of the direction of movement of the robot by "movement by copying control", that is, by "moving the robot in accordance with external force applied to the robot", and thereby enables learning of the precise robot operation in a short time and, at the same time, limits the region in which the robot can be moved by such copying control to thereby make it possible to easily avoid interference with a nearby object or the operator. Furthermore, it enables movement by copying control to be allowed in only a predetermined direction so as to more reliably prevent mistaken operation. Note that the reason for the usage of copying control is that movement of a robot by just the small external force given by an operator is difficult.

More specifically, the present invention is applied to a robot teaching apparatus for making a robot move according to an external force so as to obtain a desired position and orientation and teaching the position and orientation of the robot after the movement. Note that the term "copying control" in the present application means control of the operation of a robot by using external force given by an operator etc. as input in place of operation along contours of a master workpiece in general copying control. Further, the "position and orientation of the robot" means the position and orientation of a point representing the position and orientation of the robot and typically can be made the position and orientation of the front end point of a tool (tool coordinate system), but may be the position and orientation of a mechanical interface (mechanical interface coordinate system) affixed to the front end of an arm as well.

According to the present invention, there is provided a robot teaching apparatus for moving a robot so as to obtain desired position and orientation and teaching the position and orientation of the robot after the movement, which includes a copying control means for detecting or estimating an external force applied to the robot and moving the robot based on the detected or estimated external force; an enabling region setting means for setting an enabling region in which movement of the robot by the copying control means is enabled; and a means for enabling the copying control by the copying control means when the robot is located in the set enabling region.

Preferably, the robot teaching apparatus further includes a copying control setting means for setting a restriction that the copying control be carried out in the enabling region for only one or both of movement in a predetermined direction and a change in orientation around a predetermined axis, and the copying control means executes the copying control according to the set restriction.

Preferably, the enabling region setting means sets the enabling region based on positions of teaching points defined in a previously prepared model teaching program or positions of previously designated teaching points and an index representing the size of the region.

Further, the copying control means executes the copying control only in a direction of a line segment connecting adjoining teaching points defined in the model teaching program when a control point of the robot is located at any teaching point defined in the model teaching program or on the line segment connecting adjoining teaching points, so that the copying control means guides the movement of the robot between adjoining teaching points along the line segment.

Particularly preferably, the robot teaching apparatus further includes a means for making the operator recognize that the robot has approached one of the teaching points by once stopping the copying control when the robot approaches within a predetermined distance of one of the teaching points while executing the copying control in only the direction of the line segment connecting adjoining teaching points, and by then automatically restarting the copying control.

Further, the robot teaching apparatus may further include a means for displaying a block in the model teaching program corresponding to one of the teaching points which the robot is heading toward or one of the teaching points approached within the predetermined distance, while executing the copying control in only the direction of the line segment connecting adjoining teaching points.

When correcting the positions of the teaching points defined in the model teaching program, the corrected teaching program can be used as a new model teaching program.

The copying control by the copying control means may be performed by estimating an external force based on torques and/or speeds of motors for driving axes of the robot and automatically moving the robot in a direction where the estimated external force becomes smaller or may be performed by detecting an external force by a force sensor attached to the robot and automatically moving the robot move in a direction where the detected external force becomes smaller. Alternatively, the copying control by the copying control means may be performed by measuring an acceleration by an acceleration sensor attached to the robot, estimating an external force applied to the robot based on the measured acceleration and dynamic parameters including a mass and inertia moment, and automatically moving the robot in a direction where the estimated external force becomes smaller.

In each of the above aspects of the invention, a teaching handle having a deadman's switch and a position teaching key may be attached to the robot, and the operator may apply an external force to the teaching handle.

According to the present invention, by introducing the technique of copying control for making a robot operate in accordance with external force in the manual operation for teaching the position and orientation, easily intuitively understandable robot operation consisting of applying external force to move the robot becomes possible. Further, by restricting the region in which robot movement by copying control is enabled or allowing copying movement in only a predetermined direction, mistaken operation can be reliably prevented. As a result, the load of the teaching work of the robot is reduced, and protection of the molds and other nearby objects and simplification of program adjustment, etc. become possible.

### BRIEF DESCRIPTION OF THE DRAWINGS

The above and other objects, features and advantages of the present invention will be described in more detail below based on a preferred embodiment of the present invention with reference to the accompanying drawings, in which:
FIG. 1 is a schematic diagram for explaining a teaching apparatus according to an embodiment of the present invention; and
FIG. 2 is a schematic flow chart for showing the processing executed in the teaching apparatus of FIG. 1.

### DESCRIPTION OF THE PREFERRED EMBODIMENTS

An embodiment of the present invention will be described below with reference to the drawings.

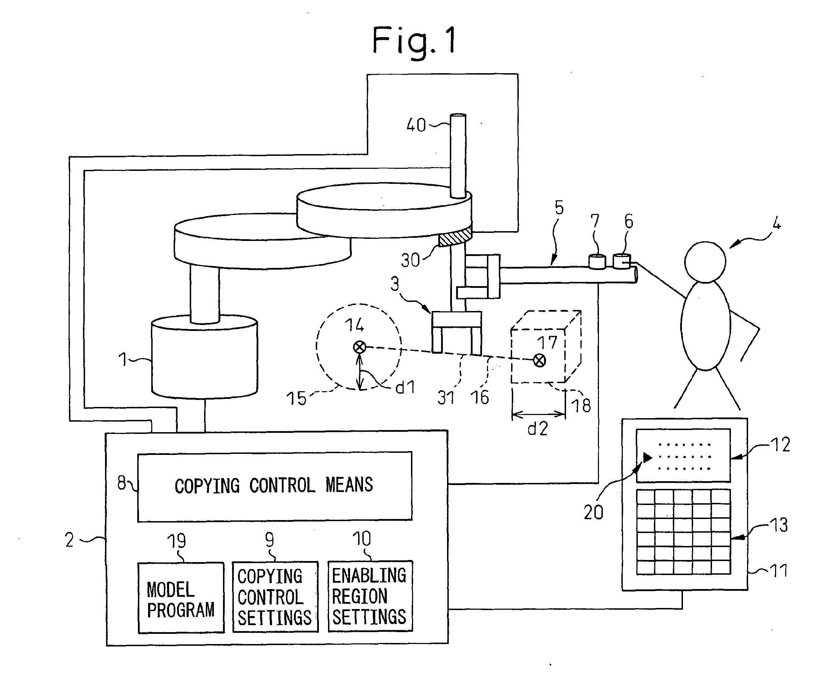

FIG. 1 is a schematic diagram for explaining a teaching apparatus according to an embodiment of the present invention. In FIG. 1, a robot manually operated utilizing copying control is indicated by reference numeral 1, while an operator manually operating and teaching the robot 1 is indicated by reference numeral 4. The robot 1 is controlled by a robot control unit 2 connected to the robot 1.

A tool (here, a hand) 3 is mounted on the front end of an arm of the robot 1, and the front end point 31 of the tool is set as the point representing the robot position. The front end point 31 of the tool represents the position and orientation of the tool 3. Near the front end of the arm of the robot 1, a manual operation handle 5 for the operator 4 to apply external force (translational force and/or rotational moment) to the robot 1 is detachably attached to the robot 1. The handle 5 has a deadman's switch 6 and a position teaching key 7. These are connected to the robot control unit 2 via a circuit (not shown) built in the operation handle 5.

In addition to the deadman's switch and the position teaching key, the handle may be provided with keys having other functions, which may also be connected to the robot control unit. For example, the handle may be provided with a jogging movement key, jogging movement lever, enable switch, alarm release key, DO output key, and/or coordinate system switching key, which may be connected to the robot control unit.

The function of the deadman's switch 6 per se is known. Namely, the operator 4 depresses the deadman's switch 6 to first set the robot 1 in the operation enable state. If the operator 4 releases the deadman's switch 6, the robot 1 immediately stops and the robot 1 will no longer move even if force is applied to the handle 5 and the arm of the robot 1. Note that, as will be described later, even when the deadman's switch 6 is depressed, movement of the robot 1 in response to external force is inhibited except when the position of the robot (the position of the front end point 31 of the tool in the present example, but also any other point representing the robot's position and orientation) is within a region defined so as to enable copying control.

Further, the position teaching key 7 is used when teaching the present position and orientation of the robot 1 to the robot control unit 2. Namely, by making the robot 1 move by the copying control in a manner described later and depressing the position teaching key 7 when the robot 1 assumes the desired position and orientation, the position and orientation are taught to the robot control unit 2.

It is also possible to graphically display the taught positions and orientations and the path connecting the teaching points on a display means of the teaching interface.

Further, it is also possible to add, to the teaching points, comments, the DO outputs, the copying control regions and/or other additional information from an input means of the teaching interface. Here, for the additional information of teaching points, default values may be automatically set if selecting the meaning of the teaching points such as the origin position or standby position from several options.

Further, if calibrating the coordinates of a molding machine or other nearby apparatus and the robot in advance, it is possible to perform the copying control of the robot and the display and/or editing of the teaching positions on the coordinate system of the nearby apparatus.

As will be described below, in some cases, a force sensor 30 or an acceleration sensor 40 may be attached near the front end of the arm of the robot 1 and connected to the robot control unit 2. Further, the robot control unit 2 may have connected to it a teaching interface 11 provided with a display means 12 (for example an LCD) and an input means 13 (for example a group of n input keys).

The robot control unit 2 is provided with a copying control means 8 and has blocks of copying control settings 9, a model program 19, and enabling region settings 10 which are associated with the copying controlling means 8. The block of the copying control settings 9 functions for storing conditions of the copying control described below, displaying information of such conditions on the display means 12 of the teaching interface 11, correcting these conditions according to instructions manually input from the teaching interface 11, etc. Note that the conditions of the copying control preset in the block of the copying control settings 9 include a "direction of the copying movement" and a "copying orientation" which are set for every enabling region described later.

The conditions of the copying control may also include a setting that the direction of the copying control be limited to a direction in a preset plane and the robot be moved by a jogging movement key in a direction vertical to that preset plane. Further, the conditions of the copying control may include a setting that the direction in which the copying control is enabled not be predetermined and that components of the external force acting upon the front end of the robot arm be compared in directions of predetermined coordinate axes to thereby enable the copying control in the direction of the coordinate axis in which the component of the external force is largest or to enable the copying control in the direction of the coordinate axis in which the component of the speed of the front end of the robot arm is largest.

The block of the model program 19 functions for example for storing various data (particularly the positional data) of a model program prepared by off-line programming, displaying information of such data on the display means 12 of the teaching interface 11, and correcting these data according to instructions manually input from the teaching interface 11, etc. Further, the block of the enabling region settings 10 functions for storing the content of the settings of the enabling region corresponding to each teaching position in the model program and the related data thereof, correcting these data according to instructions manually input from the teaching interface 11, etc.

In FIG. 1, as an example, two adjoining teaching points 14 and 17 (the positional data are given in the model program) are shown. Further, in relation to these teaching points 14 and 17, a spherical region 15 having a radius d1 centered about the teaching point 14 and a cubic region 18 having sides d2 centered about the teaching point 17 (geometric center of gravity) are set as the copying control enabling regions. In general, the enabling regions can be defined by descriptions using positions of the teaching points and the geometric parameters (d1 and d2 are examples thereof).

Further, in relation to these copying control enabling regions, a line segment 16 heading from the teaching point 14 to the adjoining teaching point 17 is set. For this line segment 16 as well, a region treated in a manner similar to the copying control enabling region (correctly, a region deemed as if on the line segment 16 within a range of an error δ) is defined. Hereinafter, this will be referred to as a "enabling line segment" for convenience.

The copying control enabling region settings and the enabling line segment settings may be determined by acquiring positional information of the nearby apparatus such as the closed position and opened position of a mold of the molding machine by communication with the nearby apparatus and by automatically computation using the positional information.

The copying control means 8 performs the copying control of the robot 1 by any method of for example the following (1) to (4). Note that as these methods of copying control performed by the copying control means 8 are known, a detailed description thereof will be omitted.
(1) An external force received by the front end of the arm of the robot 1 (for example, the origin of the mechanical interface coordinate system (the same for the following description)) is estimated based on the torque and/or speed of motors for driving axes of the robot 1, and the robot 1 is automatically moved in a direction where the estimated external force becomes smaller (that is, the direction of the external force).
(2) A force sensor 30 is attached near the front end of the arm of the robot 1, and the force sensor 30 and the robot control unit 2 are connected with each other. The copying control means 8 processes a signal representing the force and/or moment detected by the force sensor 30 and determines the external force received by the front end of the arm of the robot 1. Then, the robot 1 is automatically moved in such a direction that the determined external force becomes smaller (that is the direction of the external force).
(3) An acceleration sensor 40 is attached near the front end of the arm of the robot 1, and the acceleration sensor 40 and the robot control unit 2 are connected with each other. The copying control means 8 processes a detection signal obtained by the acceleration sensor 40, and determines the acceleration at the front end of the arm of the robot. The external force understood as having acted upon the front end of the arm of the robot 1 (for example, the origin of the mechanical interface coordinate system (the same for the following description)) is estimated based on the determined acceleration and dynamic parameters (mass, inertia moment, etc.) previously stored in an internal memory, and the robot 1 is automatically moved in a direction where the estimated external force becomes smaller (that is, the direction of the external force).
(4) The amount of movement imparted to the robot is measured by a position detecting means attached to the robot, and the robot automatically generates force preventing movement in a direction where the copying control is disabled.

As described above, the operator 4 can operate the teaching handle 5 having the deadman's switch 6 and the position teaching key 7 and the teaching interface 11 having the display means 12 and the input means 13. Note that the teaching interface 11 may also be given a usual jog feed operation function for operating the robot when the copying control is not carried out.

Also, by operating the input means 13 of the teaching interface 11, the operator 4 can display the contents of the blocks of the copying control settings 9, the enabling region settings 10, and the model program 19 or change the data such as the set contents of the blocks. Further, the operator 4 can grasp and move the teaching handle 5 to impart force and moment to the robot 1.

Then, when the operator 4 applies force (translational force and/or moment (the same for the following description)) to the robot 1 by the handle operation, the information of the external force is transferred to the robot control unit 2 by any method among the above (1) to (4), and the data of the external force (data of the 6-axis force (force and/or moment) expressed in the tool coordinate system) applied upon the front end of the robot arm represented by the front end point 31 of the tool is acquired.

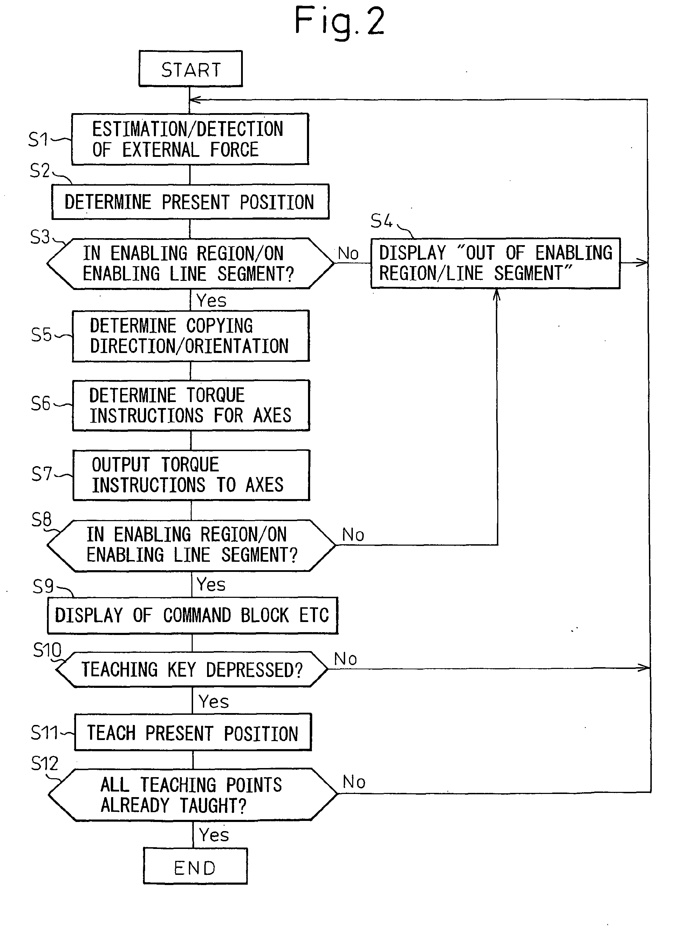

FIG. 2 is a schematic flow chart of the processing steps carried out after the above estimation/detection of the external force performed inside the robot control unit 2. In the steps, the following processing steps are carried out.

Step S1: The external force acting upon the front end of the arm of the robot 1 is estimated or detected.

Step S2: The position of the front end of the robot (front end point 31 of tool) is determined from the positional information of the axes of the robot.

Step S3: The determined position of the front end of the robot is compared with the copying control enabling regions and enabling line segments set in the block 10 of the enabling region settings, and it is decided whether or not the present robot position belongs to any enabling region or enabling line segment. If NO (the present robot position does not belong to any enabling region or enabling segment), the processing proceeds to step S4, while if YES, the processing proceeds to step S5. In the example shown in FIG. 1, when the front end of the robot belongs to any of the spherical region 15 around the teaching point 14, the cubic region 18 around the teaching point 17, or the region on the line segment 16 (error δ within the previously set range is permitted), the processing proceeds to step S5.

Step S4: The copying control is not carried out, and "out of enabling region/line segment" is displayed on the displaying means 12 and the processing routine returns to step S1. Further, according to need, the robot is jogged to near the desired teaching point (a position at which YES may be output at step S3) by using the teaching interface 11. Alternatively, the teaching interface 11 is used to move the robot to the desired teaching point (that is, partial execution of the model program). If moving to a position at which YES will be output at step S3, YES is output at step S3 immediately after that, then the processing proceeds to step S5. Note that, while copying control is not carried out, it is also possible not to detect or estimate the external force.

Step S5: In order to perform the copying control, first, the content of the copying control settings in the region where the robot is currently located is referred to from the content defined in the block 9 of the copying control settings, and the copying direction and orientation (that is, the direction of movement and the direction of change of orientation for following the external force) are determined. The content of the copying control settings includes for example "the copying movement is limited to only translation in a direction parallel to the line segment 16 (also the orientation is designated: for example, the orientation from the teaching point 14 toward the teaching point 17), and the rotational movement around the line segment 16", "the copying movement is limited to only translation in a direction parallel to the X-axis of the robot coordinate system (also the orientation is designated: for example +-direction along X-axis) and rotational movement around the X-axis", etc.

Step S6: The torque instructions required for performing copying control for only the movement and change of orientation in that direction are determined for the motors of the robot 1.

Note that the method for following only movement and change of orientation in a specific direction includes a rigidity control of the robot in which a processing using a control loop for controlling the drive of the motors is performed for example for the orthogonal coordinate position of the front end of the robot (front end point 31 of tool) so as to reduce the gain of the result of the processing for only the directions of the movement and the change of orientation to be followed.

Step S7: The motors of the robot 1 are operated according to the torque instructions to the motors of the robot 1 determined by the copying control means 8. Due to this, the front end of the robot (the front end point 31 of the tool here) operates so as to minimize the external force given by the operator 4 under a condition where the degrees of freedom of motion are limited only to a movement in a specific direction and a change in orientation around a specific axis (change in orientation of the front end point of the tool).

Step S8: A check similar to that at step S3 is carried out. Namely, it is decided whether or not the robot position after the movement performed by step S7 belongs to any of the copying control enabling regions and enabling line segments defined in the block 10 of the enabling region settings. If NO (it belongs to none of the enabling regions or enabling line segments), the processing returns to step S4, while if YES, the processing proceeds to step S9. Note that when the copying control is normally carried out, usually the output of NO is not issued.

Step S9: The block (block of command sentences) corresponding to a enabling region in which the robot is currently located or a region or line segment which the robot is approaching among the contents of the model program 19 is displayed on the display means 12 by the block display means 20 (for example, the cursor display). Due to this, the operator 4 can learn which block in the program is being taught at present.

Step S10: It is checked whether or not the position teaching key 7 was depressed. When it was not depressed, the processing returns to step S1. When it was depressed, the processing proceeds to step S11.

Step S11: The present position of the robot 1 is taught. Namely, the content of the positional data of the teaching point to which the robot is now heading in the model program is rewritten by the content of the present positional data of the robot.

Step S12: When the rewriting of the content of the positional data of all teaching points has not been completed, the processing returns to step S1. The processing is completed when the rewriting of the content of the positional data of all teaching points has been completed. Note that when re-teaching is necessary, for example the input means 13 is operated, and the processing is started again from step S1.

By repeating such a process, the content of the positional data of the teaching points in the model program is sequentially amended whereby the teaching of the robot proceeds. If the deadman's switch 6 is released, the robot 1 is stopped any time by interruption processing and the processing is once ended. However, if the deadman's switch 6 is depressed again, the state immediately before the end of the processing is desirably reproduced by a resume function.

Further, while the robot operation and teaching are proceeding, the display means 12 uses the block display means 20 (for example the cursor display) to display the block (block of command sentences) corresponding to the enabling region in which the robot is currently located or the enabling region or line segment which the robot is approaching among the content of the model program 19 (the newest display content is displayed whenever step S9 comes), therefore the operator 4 can learn which block in the program is being taught at present by viewing that.

Further, the robot control unit 2 may be provided with a function by which the copying control is once stopped and then automatically restarted when the present position of the robot approaches within a predetermined distance of a teaching point defined in the model program 19 while performing copying control along a line segment. In this case, it is possible to make the operator 4 sense the resistance and inform him of the approach to the teaching point.

Further, the copying control direction and the block being taught can be freely changed by operation from the input means 13. Also, a traditional method of teaching by instructing the direction of operation to the robot by a direction key can be carried out by operation from the input means 13 of the teaching interface 11.

While the present invention has been described with reference to specific embodiments shown in the accompanying drawings, these embodiments are for explanatory and are not limitative. Therefore, the scope of the present invention is only restricted by the claims. The preferred embodiments of the present invention may be modified or changed in any way without departing from the scope of the claims.

## Claims

1. A robot teaching apparatus for moving a robot (1) so as to obtain desired position and orientation and teaching the position and orientation of said robot after the movement, said robot teaching apparatus **characterized in that** said robot teaching apparatus comprising:
a copying control means (8) for detecting or estimating an external force applied to said robot (1) and moving said robot (1) based on the detected or estimated external force;
an enabling region setting means (10) for setting an enabling region (15; 18) in which movement of said robot (1) by said copying control means (8) is enabled; and
a means for enabling the copying control by said copying control means (8) when said robot (1) is located in the set enabling region (15; 18).

2. The robot teaching apparatus according to claim 1, wherein said robot teaching apparatus further comprises a copying control setting means (9) for setting a restriction that the copying control be carried out in the enabling region (15; 18) for only one or both of movement in a predetermined direction and a change in orientation around a predetermined axis, and said copying control means (8) executes the copying control according to the set restriction.

3. The robot teaching apparatus according to claim 1 or 2, wherein said enabling region setting means (10) sets the enabling region (15; 18) based on positions of teaching points (14; 17) defined in a previously prepared model teaching program (19) or positions of previously designated teaching points (14; 17) and an index representing the size of the region.

4. The robot teaching apparatus according to claim 3, wherein said copying control means (8) executes the copying control only in a direction of a line segment (16) connecting adjoining teaching points (14; 17) defined in said model teaching program (19) when a control point of said robot (1) is located at any teaching point (14; 17) defined in said model teaching program (19) or on said line segment (16) connecting said adjoining teaching points (14; 17), so that said copying control means guides the movement of said robot (1) between said adjoining teaching points (14; 17) along said line segment (16).

5. The robot teaching apparatus according to claim 4, further comprising a means for making the operator recognize that said robot (1) has approached one of said teaching points (14; 17) by once stopping the copying control when said robot approaches within a predetermined distance of said one of said teaching points (14; 17) while executing the copying control in only the direction of said line segment (16) connecting adjoining teaching points (14; 17), and by then automatically restarting the copying control.

6. The robot teaching apparatus according to claim 4 or 5, further comprising a means (20) for displaying a block in said model teaching program (19) corresponding to one of said teaching points (14; 17) which said robot is heading toward or one of said teaching points (14; 17) approached within a predetermined distance, while executing the copying control in only the direction of said line segment (16) connecting adjoining teaching points (14; 17).

7. The robot teaching apparatus according to any one of claims 3 to 6, wherein the positions of said teaching points (14; 17) defined in said model teaching program (19) is corrected to prepare a corrected teaching program which is used as a new model teaching program.

8. The robot teaching apparatus according to any one of claims 1 to 7, wherein said copying control means (8) estimates an external force based on one or both of torques and speeds of motors for driving axes of said robot (1) and automatically move said robot in a direction where the estimated external force becomes smaller.

9. The robot teaching apparatus according to any one of claims 1 to 7, wherein said copying control means (8) detects an external force by a force sensor (30) attached to said robot (1) and automatically moves said robot (1) in a direction where the detected external force becomes smaller.

10. The robot teaching apparatus according to any one of claims 1 to 7, wherein said copying control means (8) measures an acceleration by an acceleration sensor (40) attached to said robot (1), estimates an external force applied to said robot (1) based on the measured acceleration and dynamic parameters including a mass and inertia moment, and automatically moves said robot (1) in a direction where the estimated external force becomes smaller.

11. The robot teaching apparatus according to any one of claims 1 to 10, wherein a teaching handle (5) having a deadman's switch (6) and a position teaching key (7) is attached to said robot (1), and the operator applies an external force to said teaching handle (5).
